# EUROPÄISCHE PATENTSCHRIFT

(11) **EP 0 379 634 B1**
(45) Veröffentlichungstag und Bekanntmachung des Hinweises auf die Patenterteilung: **17.02.1993**
(21) Anmeldenummer: 89112636.9
(22) Anmeldetag: 10.07.1989
(51) Int. Cl.: E06B 5/00

(54) **Struktur für die Spaltabdichtung bei Verladetoren**
Structure for sealing gaps at loading doors
Structure pour calfeutrage d'entrefers aux portes de chargement

(30) Priorität: 27.01.1989 DE 3902482
(43) Veröffentlichungstag der Anmeldung: 01.08.1990
(73) Patentinhaber: HÜBNER Gummi- und Kunststoff GmbH, D-34123 Kassel (DE)
(72) Erfinder: Koch,Robert, 3437 Bad Sooden-Allendorf (DE)
(74) Vertreter: Walter, Helmut, Dipl.-Ing.

(56) Entgegenhaltungen:
- GB-A- 2 204 083

## Beschreibung

Die Erfindung betrifft eine Seitenwand oder ein Dach für eine Verladetorabdichtung gemäß dem Gattungsbegriff des Patentanspruches 1.

Im allgemeinen finden bei Verladetorabdichtungen in sich elastisch biegbare Schürzen Anwendung, wobei es sich um mehr oder weniger breite, bahnförmige Materialstreifen handelt, von denen jeweils einer mit seiner einen Längskante an einer der beiden Seiten und einer am Sturz der Toröffnung befestigt ist und der jeweilige Materialstreifen mit seiner freien Längskante auf einer Fläche des an das Tor herangefahrenen, mit seinem kastenförmigen Aufbau in der Toröffnung stehenden Fahrzeuges aufliegt DE-A-3130657 Unterschieden in der Spaltbreite kann durch die elastische Biegbarkeit der Materialstreifen Rechnung getragen werden, indem die Materialstreifen bzw. Schürzen mehr oder weniger in sich gebogen auf dem Fahrzeug, beispielsweise auf dem Kofferaufbau eines rückwärts in die Toröffnung teilweise hineinrangierten LKW aufliegen. Diese einfachste Lösung einer Torabdichtung ist in zahlreichen Ausgestaltungen bekannt, sie lassen sich jedoch alle auf das geschilderte Prinzip zurückführen. Nach einem anderen Prinzip sind teleskopartig gegeneinander verstellbare Platten vorgesehen, die mehr oder weniger weit aus Gebäudetaschen heraus in die Toröffnung hinein zu verstellen sind. Schließlich ist bekannt, daß zum Verschließen nicht genutzter Toröffnungen bestimmte Rolladen nur zo weit herabgelassen werden, daß sie auf der Oberseite des Fahrzeugaufbaues aufstehen (Farbprospekt "Torabdichtungen" der Firma Hübner, Kassel).

Eine gattungsgemäße Torabdichtung ist aus der GB-A-2 204 083 bekannt. Bei ihr besteht jede der insgesamt drei Teibaugruppen, einer oberen, horizontalen und zwei seitlichen, vertikalen Teilbaugruppe einer Torabdichtung aus einer Mehrzahl von aufeinanderfolgenden, im Querschnitt etwa tonnenförmigen hohlen Wülsten, wobei zwei aufeinanderfolgende Wülste eine gemeinsame, gelochte Trennwand haben. Jeder dieser Materialbahnen ist eine Feder zugeordnet, die im entspannten Zustand die Wülste Kollabieren in Durchmesserrichtung bringt, so daß die Gasamtbaugruppe ihre geringste Länge hat. Wird in den von der Gesamtheit der Wülste einer Baugruppe umschlossenen Hohlraum komprimierte Luft eingebracht, so werden die Wülste bis zu ihrem größtmöglichen Volumen aufgeblählt und bei größtmöglichem Volumen hat die Baugruppe ihre größtmögliche Länge. Die Federn werden dabei zwangsweise gespannt.

Der Erfindung liegt die Erkenntnis zugrunde, daß eine auf dem gleichen Prinzip beruhende Baugruppe sehr viel einfacher sein kann, wenn sie nicht aus einer Mehrzahl aufeinanderfolgender hohler Wülste, sondern aus einem sogenannten Abstandsgewebe gebildet wird.

Sogenannte Abstandsgewebe wurden neuerdings für bestimmte Anwendungsfälle entwickelt. Zwei beschichtete, im Ausgangszustand glatte Gewebebahnen verlaufen parallel zueinander mit veränderbarem Abstand voneinander, wobei der maximale Abstand durch zugfeste aber biege- und druckweiche Fäden bestimmt wird, die beim Weben der oberen und unteren Gewebebahn auf Spezialmaschinen eingewebt werden und zumindest etwa gleichmäßig auf die Fläche des sogenannten Abstandsgewebes verteilt sind, beim Beschichten der Gewebebahnen jedoch von der Beschichtung ausgenommen bleiben.

Die Erfindung besteht demzufolge in ihrem Kern darin, eine bahnförmige Baugruppe für eine Spaltadichtung und insbesondere eine Torabdichtung aufzuzeigen, bei der ein sogenanntes Abstandsgewebe Anwendung findet und dessen Vorteile weitestgehend genutzt werden. Eine Torabdichtung unter Anwendung einer erfindungsgemäßen Baugruppe unter Einschluß eines an sich bekannten Abstandsgewebes ist einfach, sie verwendet ein an sich bekanntes, in großen Mengen hergestelltes und demzufolge preiswert zu beziehendes Material und sie hat extrem geringe Ansprechzeiten, weil die Ausbreitung des Gasdruckes über die ganze durch die in großer Zahl vorhandenen aber dünnen Fäden kaum behindert wird.

Die wesentlichen Merkmale der erfindungsgemäßen Baugruppe für eine Spaltabdichtung und insbesondere Torabdichtung ergeben sich aus den Patentansprüchen.

Zwei Ausführungsformen des Grundgedankens der Erfindung sind nachfolgend anhand der Zeichnung erläutert.

In der Zeichnung zeigen:
Fig. 1 ein Abstandsgewebe im Querschnitt, wie es selbst nicht Gegenstand der Erfindung ist, aber bei der Erfindung zur Anwendung kommt; es sind in der Zeichenebene verlaufend die einen (A), senkrecht zur Zeichenebene verlaufend und geschnitten die anderen (B) der senkrecht zueinander verlaufenden Fäden der Gewebebahnen der oberen und unteren Materialbahnen (C und D) sowie die Beschichtungen (E) der Gewebe und die Verbindungsfäden (F) zwischen oberer und unterer Materialbahn dargestellt,
Fig. 2 in einem wesentlich anderen Maßstab eine Toröffnung (G) in einer Hauswand (H) mit drei Schürzen (J,K,L), von denen jede erfindungsgemäß ausgestaltet ist und eine erfindungsgemäße Struktur ist, um einen Spalt zwischen der Umgrenzung der Toröffnung und einem diesem zugeordneten Fahrzeug mit insbesondere kofferartigem Aufbau abzudecken,
Fig. 3 in einem wiederum wesentlich anderen Maßstab eine erfindungsgemäße Baugruppe im Querschnitt und im Betriebszustand (luftgefüllte Baugruppe gespannte Wickelfedern),
Fig.3a in einer Fig.3 in etwa entsprechenden Darstellung die Mittellinie der Baugruppe im Außerbetriebszustand (entspannte Wickelfeder, Baugruppe ohne Druckluftfüllung und aufgewickelt),
Fig. 4 die Baugruppe gemäß Fig.3 als Draufsicht in etwa dem Maßstab, der in Fig.3 verwendet wurde, im Betriebszustand und
Fig. 5,6 eine weitere, bevorzugte Ausführungsform des Grundgedankens der Erfindung in schematischer Darstellung.

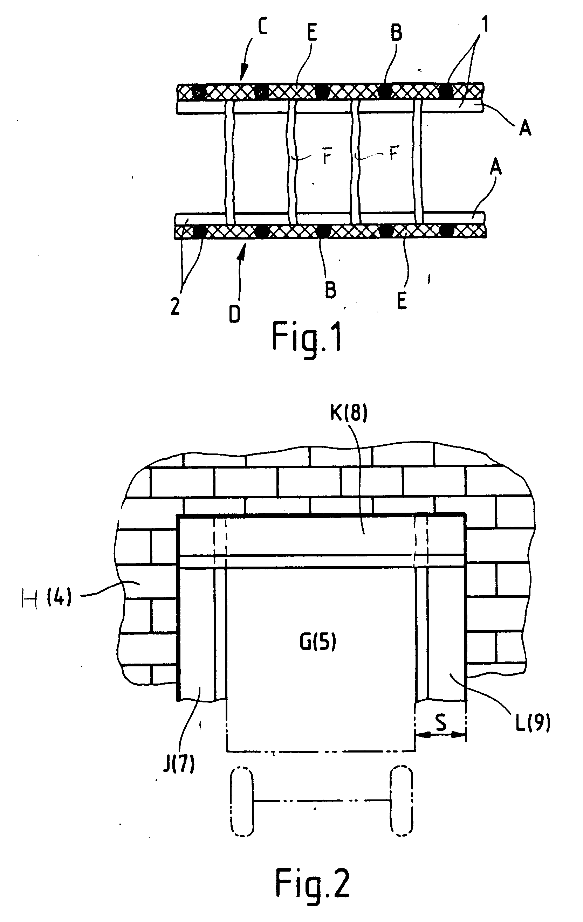

Das bei der Erfindung zur Anwendung kommende Abstandsgewebe ist schematisch in Fig.1 dargestellt. Es ist zunächst eine obere und eine untere Gewebebahn 1,2 auf einem Spezialwebstuhl hergestellt, und dabei werden die obere und die untere Gewebebahn 1,2 durch Abstandsfäden 3 (bzw. F) miteinander verbunden, die zugfest aber biege- und druckweich sind, so daß der maximal mögliche Abstand zwischen oberer und unterer Gewebebahn durch die gestreckte Länge der Abstandsfäden bestimmt ist, darunter aber jeder Abstand möglich ist und bei minimalem Abstand obere und untere Gewebebahn nur durch die regellos zusammengelegten Abstandsfäden voneinander auf Abstand gehalten sind. Obere und untere Gewebebahn, nicht aber die Abstandsfäden sind gasdicht beschichtet, ohne daß es aber bei der bisherigen Anwendurig von Abstandsgeweben hierauf ankäme. Bei der Erfindung wird aber gerade diese Eigenschaft ausgenutzt, und es ergibt sich daraus, daß es bei der Erfindung nicht um das Abstandsgewebe selbst geht sondern um dessen Ausgestaltung und Anwendung.

Als erfindungsgemäße Anwendung gilt eine Torabdichtung, wie sie als solche sich aus Fig. 2 ergibt. In einer Gebäudewand 4 (bzw. H) ist eine Toröffnung 5 (bzw. G) vorgesehen, in die insbesondere Lastkraftwagen mit dem hinteren Ende insbesondere eines Kofferaufbaues einrangieren sollen, so daß zwischen den Rändern der Toröffnung 5 als feststehenden Flächen und den Wänden und dem Dach des Kofferaufbaues 6 als beweglichen Flächen ein Spalt S bleibt, der notwendig ist, aber abgedichtet sein soll. Dieser Abdichtung dienen die drei Baugruppenteile 7,8,9 (bzw. J,K,L), die gleich und erfindungsgemäß ausgestaltet sein können und von denen deshalb nachfolgend nur eine beschrieben wird, wobei es gleichgültig ist, um welches der drei Baugruppenteile es sich handelt, so daß im Zusammenhang mit der Erfindung auch zunächst von einer bahnförmigen Material baugruppe gesprochen wird. Diese Baugruppen sollen mit ihren hinteren Längskanten an der Torumgrenzung befestigt sein und mit ihren vorderen Längskanten oder dahinterliegenden Bereichen zwangsweise und mit mäßigem Druck an einer der Seitenwände bzw. dem Dach des Kofferaufbaues des Fahrzeuges zur Anlage gebracht und wieder davon entfernt werden können.

Ein vorbeschriebenes Abstandsgewebe in der Abmessung des gewollten Baugruppenteils ist zunächst an allen vier Seiten offen. An der Seite, die später dem Rand der Toröffnung zugeordnet werden soll, wird zwischen die obere und untere Materialbahn auf der gesamten Länge dieser Seite ein hohles, an den Enden geschlossenes Vierkantprofil 10 eingeklebt. Auf der in das Innere der Baugruppe hineinweisenden Seite ist das Vierkantprofil 10 mit einer Anzahl von Löchern 11 versehen, die keinerlei Einbauten aufweisen und zumindest etwa gleichmäßig auf die gesamte Länge des Vierkantrohres verteilt sind. Auf der Gegenseite des Vierkantprofiles 10 sind einige wenige Löcher vorgesehen, von denen einige Löcher 12 Rückschlagventile 13 aufweisen, die einen Durchgang von Druckgas, insbesondere Druckluft in das Baugruppen innere und von denen einige andere Löcher 14 Ventile 15 aufweisen, die zwangsweise zu öffnen sind, um Gas, insbesondere Luft aus dem Baugruppen-inneren entweichen zu lassen. Gegebenenfalls ist mit nur einem Loch der erstgenannten Art und/oder nur einem Loch der zweitgenannten Art auszukommen, gegebenenfalls können die Löcher auch dem oder einem Stirnseitigen Deckel 10a bzw. 10b des Vierkantprofiles zugeordnet sein. Wesentlich ist, daß die Verbindung des Inneren des Vierkantrohres mit der Umgebung der Baugruppe in relativ geringer, zentraler Weise erfolgt, während die Verbindung des Inneren des Vierkantrohres mit dem Inneren der Baugruppe in einem relativ großen Bereich erfolgt. Das Innere des Vierkantrohres wirkt auf diese Weise beim Befüllen der Baugruppe mit Gas, vorzugsweise mit Luft, als Verteilkammer, beim Entleeren als Sammelkammer.

An den übrigen Seiten sind obere und untere Materialbahn gasdicht miteinander verklebt. Dabei ist an der dem Vierkantrohr gegenüberliegenden Seite, die mit der beweglichen Spaltbegrenzungsfläche zusammenwirkt, zum Schutz der Baugruppe gegen Beschädigung eine der Seitenlänge entsprechende Fahne 16 angeklebt. In der praktischen Ausführung ist auch diese Kante mit einem Profil versehen, obwohl bereits das Zusammenfügen der beiden Materialbahnen, insbesondere in Verbindung mit der Einfügung der Fahne 16 eine Profilwirkung ergibt; dieser Bereich wird deshalb im Zusammenhang mit der Erfindung als ebenfalls ein Profil aufweisend angesehen, an dessen Ausgestaltung jedoch keine besonderen Anforderungen gestellt werden.

Zumindest auf der Außenseite der oberen oder der unteren Materialbahn ist zumindest eine Tasche 17 aufgeklebt, die vom Bereich des Vierkantrohres 10 bis zum gegenüberliegenden Baugruppen ende reicht und parallel zu den beiden anderen Rändern der Baugruppe verläuft.

In dieser Tasche ist eine bandförmige Wickelfeder 18 eingeschoben, so daß sie auf ihrer gesamten Länge auf der oberen bzw. unteren Materialbahn gehalten ist. Im zwangsweise gestreckten Zustand ist die Wickelfeder gespannt, wirkt keine Kraft, die die Wickelfeder streckt, so rollt sich die Wickelfeder zusammen und wickelt die gesamte Baugruppe in entsprechender Weise auf. Um dieses Aufwickeln in Richtung auf das Vierkantrohr zuverlässig und ohne Zwischenfall erfolgen zu lassen, ist die WIckelfeder 18 mit dem dem Vierkantrohr 10 näheren Ende am Vierkantrohr befestigt bzw. zumindest bis an das Vierkantrohr herangeführt.

Sind, was gegebenenfalls zweckmäßig ist, mehrere parallele Wickelfedern vorgesehen, so ist je eine Wickelfeder nahe den seitlichen Baugruppen rändern angeordnet, und eine oder mehrere weitere aber entsprechende Wickelfedern ist bzw. sind in paralleler Anordnung im Bereich dazwischen angeordnet. Gegebenenfalls können auf die Baugruppe verteilt zu den erstgenannten Taschen 17 senkrecht verlaufende Taschen 19 vorgesehen sein, in die Stabilisierungsschienen 20 aus Blech oder Kunststoff eingelegt sind, die die Baugruppe senkrecht zur Wirkrichtung der Wickelfeder 18 strecken, ansonsten aber die Funktion der Baugruppe nicht beinflussen sollen.

Das Vierkantrohr 10 weist Befestigungselemente 21 (Laschen mit Durchgangslöchern für Befestigungsschrauben) auf, mit denen die Struktur der Seite der Torumgrenzung zugeordnet werden kann, der sie zugeordnet werden soll und der entsprechend sie bemessen ist. Im einfachsten Fall weist das Vierkantrohr Bereiche auf, mit denen sie in gebäudefeste Halter eingelegt werden kann.

Ist die Baugruppe dem Gebäude zugeordnet, so liegt sie von den Wickelfedern aufgewickelt in aufgewickeltem Zustand an der Umgrenzung des Tores an. Ist nun ein Fahrzeug in die Toröffnung eingefahren, so kann der Spalt zwischen Fahrzeugaufbau und Rand der Toröffnung dadurch abgedeckt werden, daß die Baugruppe zwangsweise mit Luft befüllt wird. Der Luftdruck überwindet die Federkraft, und die Baugruppe wird so weit gestreckt, daß sie mit dem Vierkantrohr gegenüberliegenden Ende oder einem Bereich dahinter am Fahrzeugaufbau anliegt. Bei größter vorgesehener Spaltbreite ist die Baugruppe gestreckt, Da der Luftdruck auf einer großen Fläche wirkt, ist ein nur geringer Druck notwendig, um die Kraft auch relativ starker Wickelfedern zu überwinden. Die Luftzufuhr erfolgt in der Weise, daß die Zufuhröffnung 12 bzw. entsprechenden Zufuhröffnungen des Vierkantrohres an einen Kompressor angeschlossen werden. Die Entleerung der Baugruppe erfolgt dadurch, daß bei unterbrochener Luftzufuhr die Ventile 15 in den Auslaßöffnungen geöffnet werden. Kompressor sowie Steuerung der Luftzu- und -abfuhr erfolgen mit konventionellen Mitteln, die nicht beschrieben werden müssen.

Diese erfindungsgemäße Lösung hat den Vorteil, daß sie robust ist, für stark schwankende Schlitzbreiten geeignet ist und an sich verfügbare, bewährte Bauteile verwendet.

Bei stark veränderlicher Schlitzbreite wird die Baugruppe dem Gebäude so zugeordnet, daß sie in der Ebene verstellt wird, in der die Toröffnung liegt, bzw. in einer Ebene verstellt wird, die zur Toröffnungsebene parallel verläuft. Sollen vielfach konstante Schlitze überdeckt werden, und/oder sollen Fahrzeuge in Frage kommen können, deren querschnitt eine Einfahrt in die Toröffnung nicht zuläßt, so kann die Baugruppe auch so dem Gebäude zugeordnet werden, daß sie senkrecht zu der Ebene verstellt wird, in der die Toröffnung liegt und die Baugruppe mit dem dem Vierkantrohr abgekehrten, freien Ende nicht mehr an den Seiten bzw. dem Dach des Fahrzeugaufbaues zur Anlage kommt, sondern an der Aufbaurückseite.

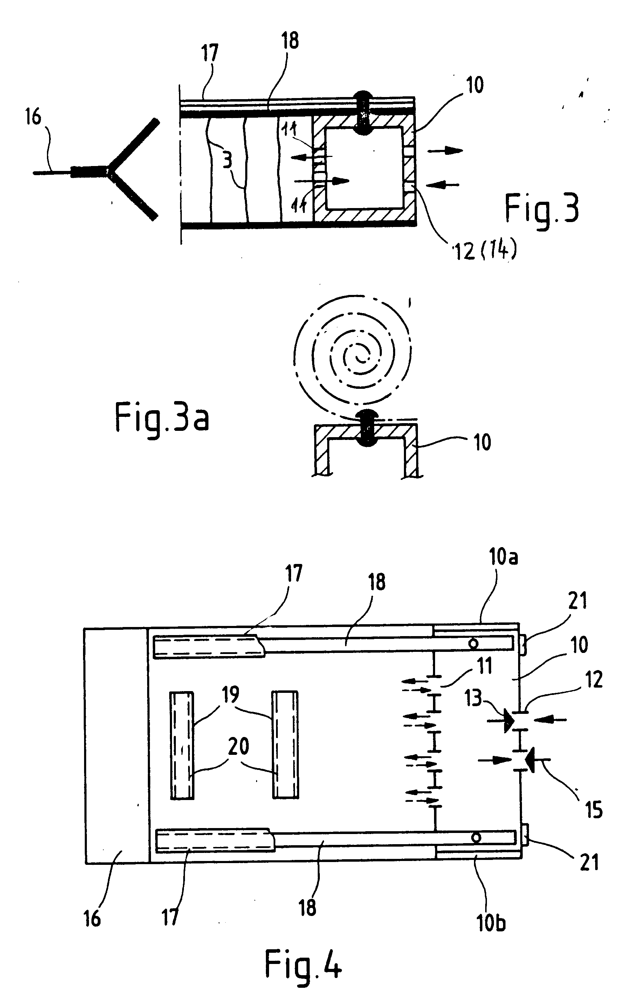

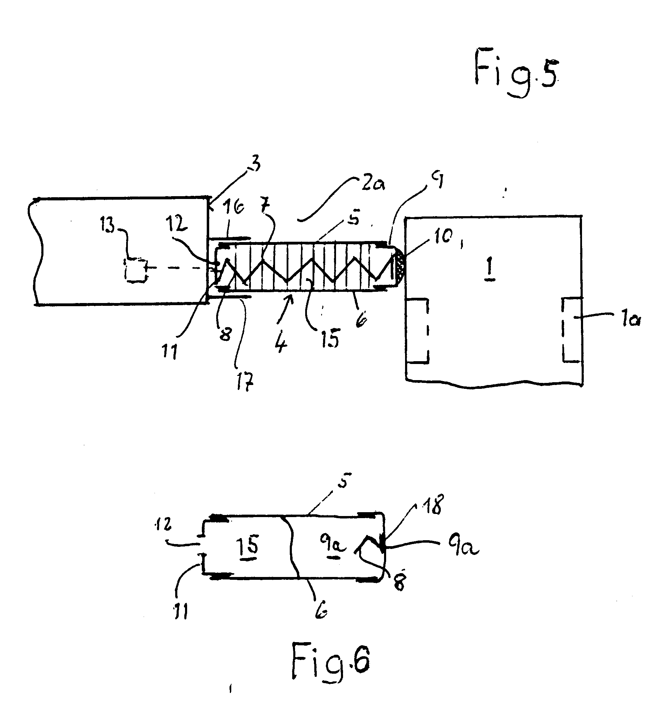

Eine weitere, gegenüber der bisherigen Ausführung des Grundgedankens der Erfindung zu bevorzugende Ausführungsform des Grundgedankens der Erfindung ist nachfolgend anhand der Figuren 5 und 6 der Zeichnung beschrieben. Wegen der selbständigen Bedeutung dieser Ausführungsform ist sie unabhängig von der Lösung nach Fig. 1 bis 4 und ohne Bezugnahme auf diese beschrieben, obwohl beide Lösungen bezüglich des Abstandsgewebes und der Umhüllung eines veränderbaren Gasvolumens durch ein Abstandsgewebe und Randprofile einander gleichen oder daher dies der gemeinsame Grundgedanke beider Lösungen ist.

Gemäß Fig. 5 ist ein in der Draufsicht dargestellter Lastkraftwagen mit einem Kastenaufbau 1 und den Hinterrädern 1a in eine Gebäudeöffnung eingefahren, wobei nur der seitliche Spalt 2 zwischen dem Kastenaufbau 1 und einer seitlichen Öffnungsbebrenzung 3 dargestellt sind. Vom oberen bis zum unteren Ende des Spaltes 2 ist die Baugruppe 4 angeordnet, die unter Verwendung eines sogenannten Abstandsgewebes aufgebaut ist. Im Ausgangszustand handelt es sich bei dem "Abstandsgewebe" um zwei parallele Gewebebahnen, die mit Gummi beschichtet sind. Die beiden Materialbahnen 5,6 aus mit Gummi beschichteten Geweben können problemlos einander genähert werden, während ihr maximaler Abstand nicht überschritten werden kann, weil dieser durch Fäden 7 zwischen den beiden Materialbahnen bestimmt ist. Diese Abstandsfäden 7 werden mit den Gewebebahnen der beiden Materialbahnen bei der Herstellung verbunden, von der Beschichtung der Gewebe der beiden Materialbahnen mit Gummi jedoch ausgenommen, so daß zwischen den beiden Materialbahnen ein Hohlraum besteht, dessen maximale Breite von der maximalen Länge der Abstandsfäden bestimmt ist. Die Abstandsfäden 7 sind auf die Flächen der beiden Materialbahnen verteilt, wobei im vorliegenden Fall ein Abstandsgewebe Verwendung findet, dessen Abstandsfäden 7 in mehreren Reihen nebeneinander angeordnet sind, wobei der Abstand zwischen den Fäden innerhalb der Reihen relativ klein sein kann, der Abstand zwischen den Reihen jedoch so bestimmt sein soll, daß zwischen zwei nebeneinanderliegenden Reihen eine Feder 8 Platz hat, auf die später noch zurückzukommen sein wird. Entsprechendes gilt für den Abstand zwischen beiden Materialbahnen.

Aus einem solchen "Abstandsgewebe" wird nun für jeden seitlichen und/oder für den oberen Spalt zwischen Fahrzeugaufbau und Torumrahmung eine Schürze gefertigt, deren Breite sich aus der maximalen Spaltbreite und deren Länge sich aus der maximalen Spaltlänge ergibt. Den beiden Materialbahnen 5,6 werden nun ringsum Randprofile zugeordnet, die den Zwischenraum zwischen den beiden Materialbahnen zu einer luftdichten Kammer werden lassen, wobei bei der Zuordnung der Randprofile zu den Materialbahnen zwischen den Randprofilen an den Strukturlängsseiten, auf die Materialbahnlänge verteilt die bereits erwähnten Federn 8 eingebaut werden, weshalb bei der Herstellung des Abstandsgewebes durch entsprechende Reihenabstände zwischen den Reihen der Abstandsfäden hierauf Rücksicht genommen werden muß. Das äußere Randprofil, d.h. das der dem Fahrzeugaufbau 1 zugekehrten Baugruppen Längskante zugeordnete Randprofil ist in der Zeichnung mit dem Bezugszeichen 9 versehen und eine Schiene mit U-förmigem Querschnitt. Es ist zwischen den Rändern der Materialbahnen 5,6 eingesetzt oder übergreift diese jeweils mit seinen Schenkeln und ist in geeigneter Weise mit den Materialbahnen 5,6, beispielsweise durch Kleben, verbunden. Seine Außenseite ist mit einem Belag 10 beschichtet, der es möglich macht, daß das Randprofil an den Fahrzeugaufbau 1 angelegt wird, ohne daß dieser verkratzt oder sonstwie beschädigt wird. Im einfachsten Fall handelt es sich um einen aufgeklebten Moosgummistreifen. Das zu dem äußeren Randprofil 9 parallel verlaufende innere Randprofil 11 ist in entsprechender Weise den inneren Rändern der Materialbahnen 5,6 zugeordnet. Auf die Länge dieses Randprofiles 11 sind Öffnungen 12 verteilt. Das innere Randprofil 11 ist starr, es kann aus starrem Kunststoff oder Metall, beispielsweise Aluminium bestehen. Das Randprofil 9 ist elastisch, um die Relativbewegungen zwischen den Materialbahnen 5,6 nicht zu behindern.

Eine einfachste und deshalb bevorzugte Lösung ist dadurch gekennzeichnet, daß lediglich das innere Randprofil 11 an der der Torumgrenzung zugekehrten Längskante ein starres Strangprofil ist. Die anderen "Randprofile" an der oberen und unteren schmaleren Kante und das äußere Randprofil an der dem Fahrzeugaufbau 1 zugekehrten Längskante ist ein Materialstreifen aus gummibeschichtetem Gewebe, also entsprechend dem Material der oberen und unteren Materialbahn 5 bzw. 6, dieser Materialstreifen 9a läuft von einem Ende des starren, inneren Randprofiles 11 um die gesamte Struktur herum bis zum unteren Ende des inneren Randprofiles 11, er ist mit seinen Rändern umgebückt, um auf den Außenflächen der Randbereiche der Materialbahnen 5,6 aufzuliegen und mit diesen Bereichen gasdicht verbunden, insbesondere verklebt oder verschweißt zu sein (Fig. 6). Die entsprechende Ausgestaltung der Baugruppe für eine obere Schürze ergibt sich ohne weiteres, d.h. eine besondere Beschreibung ist nicht erforderlich.

In der Richtung zwischen den beiden Randprofilen 11,9, also in der Breite, ist die Struktur längenveränderlich. Sollen die Materialbahnen unabhängig von der Spaltbreite im wesentlichen glatt sein, so müssen die Materialbahnen in dieser Richtung in sich elastisch zu längen und zu kürzen sein. Die in dieser Richtung verlaufenden Gewebefäden müssen entsprechend elastisch und wie der zum Beschichten verwendete natürliche oder künstliche Gummi entsprechend elastisch nachgiebig sein. Soll solches Material nicht zur Anwendung kommen, so sind die Materialbahnen entsprechend ziehharmonikaartig zu falten, wobei die Längenänderung zu Winkelveränderungen zwischen den einzelnen Streifen führt.

Wiederum in einfachster Weise und insbesondere bei Anwendung eines vom oberen zum unteren Ende des inneren Randprofiles durchlaufenden Materialstreifens aus gummiertem Gewebe als die drei übrigen "Randprofile" ist es möglich, undehnbares Gewebe zu verwenden und die obere und die untere Materialbahn 5 bzw. 6 in ihrer Breite so zu bemessen, daß sie im glatten Zustand jedoch ohne Dehnung in sich den Spalt zwischen Torumgrenzung und Fahrzeugaufbau bei maximaler Spaltbreite verschließt und bei geringerer Spaltbreite oder bei geringster Breite in mehr oder weniger ungeordnete Falten bzw. Wellen gelegt wird. Bei nicht zu großen Spaltbreitenunterschieden ist eine solche Lösung völlig ausreichend.

Bei den Federn 8 handelt es sich um Wickelfedern, die bei einem Druckanstieg in der jeweiligen Kammer 15 durch ihre Befestigung an den Randprofilen 9 bzw. 9a und 11, die sich dabei voneinander entfernen, gelängt und gegebenenfalls gespannt werden und die Verringerung des Abstandes zwischen den beiden Randprofilen 9,11 unterstützen und bewirken, daß ohne äußere Einflüsse die Abstandsprofile 11 und 9 bzw. 9a den geringsten Abstand voneinander haben.

Bei geringstem Abstand zwischen den Randprofilen 11 und 9 bzw. 9a bzw. geringster Breite der Struktur liegt diese zwischen zwei seitlichen Schalungswänden 16,17 der Umgrenzung der Verladetoröffnung. Das vordere Randprofil 9 bzw. 9a deckt den Spalt zwischen den Schalungswänden ab, so daß die erfindungsgemäßen Wand oder der entsprechend ausgestaltete Deckenstreifen bei Nichtgebrauch in einer Kammer untergebracht sind bzw. ist und vor Zerstörung oder Verschmutzung gesichert sind bzw. ist.

Die erfindungsgemäße Wand, Schürze oder allgemein Baugruppe wird der einen der drei Umgrenzungswände einer Toröffnung zugeordnet und an das Gebläse 13 angeschlossen. Die Federn 8 halten die Baugruppe bei geringster Breite an der Umgrenzungswand zwischen den Schalungswänden 16,17. Ist ein Fahrzeug mit seinem kastenförmigen Aufbau 1 in die Toröffnung eingefahren, so wird mittels des Gebläses 13 Luft in die Kammer 15 eingeblasen und der Innendruck so erhöht, daß die Kraft der Federn erhöht wird und die Baugruppe mit ihrem äuße-ren Umgrenzungsprofil 9 bzw. 9a an eine Wand des Fahrzeugaufbaues anlegt. Es liegt eine vollkommene Spaltabdichtung vor, bei der weder für die Spaltabdichtung noch für den Fahrzeugaufbau die Gefahr besteht, beschädigt zu werden. Ist die Baugruppe auf die notwendige Breite gebracht, so wird das Gebläse mit entsprechenden üblichen Endanschlägen abgeschaltet.

Ist das Fahrzeug be-, ent- oder umgeladen, so wird das Gebläse umgeschaltet, es saugt die vorher eingeblasene Luft ab und die Federn in Verbindung mit den Abstandsfäden sorgen für eine ordnungsgemäße Rückführung der Baugruppe. Beim Einblasen von Luft in die Kammer sorgen die Abstandsfäden dafür, daß die Baugruppe in der gewollten Kontur expandiert, vorzugsweise soll die aufgeblähte Baugruppe den aus der Zeichnung ersichtlichen Rechteckquerschnitt haben. Ohne pneumatischen Innendruck kann die Baugruppe schlaff und entsprechend willkürlich konturiert soweit zusammenfallen, wie es die Eigensteifigkeit des verwendeten Materials zuläßt.

Die Wand des Fahrzeugaufbaues, an die die Baugruppe angelegt wird, kann eine Rückwand oder vorzugsweise eine Seitenwand und das Dach sein. Die einzelnen Baugruppenteile können unabhängig voneinander betrieben werden, indem jede ein eigenens Gebläse hat oder zwei oder alle drei Baugruppenteile können durch Luftführungskanäle miteinander verbunden sein.

Die vom Gebläse und den Federn 8 aufzubringenden Drücke können gegebenenfalls so aufeinander abgestimmt sein, daß die Blähung der Baugruppe entgegen der Kraft der Federn 8 mittels des vom Gebläse aufgebauten Druckes erfolgt, während die Verkleinerung allein durch die Federn bewirkt wird und dabei der Luftaustausch allein durch die Öffnungen 12 erfolgt, ohne daß vom Gebläse eine Saugwirkung aufgebracht wird.

Bei der beschriebenen Lösung ist bei Anwendung des Materialstreifens 9a als Randprofil dafür Sorge zu tragen, daß die Federn 8 durch Verwendung entsprechender Verankerungsplatten 18 so mit dem längeren Abschnitt des Randprofiles verbunden sind, daß bei sich entspannenden Federn 8 der längere Randprofilabschnitt unter entsprechender Verformung der übrigen Baugruppen- bereiche der Verladetorumgrenzung 3 genähert werden kann, ohne daß das Material des das Randprofil bildenden Streifens beschädigt wird.

Die Baugruppe kann jedoch auch derart abgewandelt werden, daß das Gebläse 13 nur als Sauggebläse wirkt. Die Federn 8 sind Druckfedern, die die Baugruppe in ihrer absoluten oder relativen maximalen Breite und in Anlage am Kofferaufbau halten. Wird innerhalb der Struktur ein entsprechender Unterdruck erzeugt, so tritt unter Oberwindung der Druckkraft der Federn 8 eine entsprechende Volumenverkleinerung der Baugruppe ein. Um diesen Unterdruck nicht ständig aufrechterhalten zu müssen, kann durch entsprechende Riegel eine Entspannung der Federn 8 verhindert werden, wenn die Baugruppe zwischen die Wände 16,17 zurückgeführt worden ist.

## Patentansprüche

1. In ihrer Kontur veränderbare, bahnförmige Baugruppe zur Abdichtung des Spaltes zwischen zwei relativ zueinander beweglichen Flächen, insbesondere einer feststehenden Fläche, an der die Baugruppe entlang einer ihrer Kanten zu befestigen ist und einer gegenüber dieser Fläche zwangsweise verstellbaren Fläche, an der die Baugruppe mit ihrer gegenüberliegenden Kante zur Anlage zu bringen ist, wobei die Baugruppe zwei im wesentlichen parallel zueinander verlaufende Materialbahnen aufweist, zwischen denen sich ihren maximalen Abstand bestimmende Mittel befinden und die Teile der Umhüllung eines veränderbaren Gasvolumens sind, wobei eine Gaszuführung eine Vergrößerung des Gasvolumens, eine entsprechende Verlängerung der Baugruppe in einer Richtung und die Spannung von Federn bewirkt, wobei sich weiter bei der Möglichkeit der Gasvolumenverringerung durch gesteuerte Verbindung des Gasvolumens mit der Umgebung der Baugruppe die Federn entspannen und die Baugruppenverlängerung ganz oder teilweise rückgängig machen, **dadurch gekennzeichnet**, daß jede Materialbahn ein im Ausgangszustand glattes Gewebe mit einer gasdichten Beschichtung ist und die abstandsbestimmenden Mittel aus einer Vielzahl von zwischen den gasdicht beschichteten glatten Gewebebahnen angeordneten zugfesten, aber druck- und biegeweichen Fäden bestehen.

2. Baugruppe nach Anspruch 1, **dadurch gekennzeichnet**, daß die Baugruppe zwischen den beschichteten Gewebebahnen ringsum gasdicht geschlossen ist, daß die Baugruppe Steuermittel zum gesteuerten Ein- und Auslaß eines Gases in den bzw. aus dem auf diese Weise gebildeten Hohlraum der Baugruppe aufweist und daß auf der Außenseite zumindest einer der Materialbahnen zumindest eine bandförmige Wickelfeder (18) in Punkten, die auf die Länge der Wickelfeder zumindest etwa gleichmäßig verteilt sind, befestigt ist, und zwar in einer Richtung, die zwischen der zu befestigenden Baugruppenkante und der gegenüberliegenden Baugruppenkante verläuft und in der die Baugruppe biegbar ist (Fig. 1 bis 4).

3. Baugruppe nach Anspruch 2, **dadurch gekennzeichnet**, daß auf der Außenseite zumindest einer der beiden beschichteten Gewebebahnen zumindest eine Tasche (17) gebildet ist, die sich zwischen der zu befestigenden Kante und der zur Anlage zu bringenden Kante erstreckt und die die zumindest eine bandförmige Wickelfeder (18) aufnimmt.

4. Baugruppe nach Anspruch 2 oder 3, **dadurch gekennzeichnet**, daß der gasdichten Verbindung der beiden Materialbahnen entlang einer Baugruppenkante ein stangenförmiges Hohlprofil (10) dient, das mit beiden Materialbahnen gasdicht verbunden ist, die Länge dieser Baugruppenkante hat und zumindest eine steuerbare Gasein- und Auslaßeinrichtung (13,15) an der, bezogen auf die Struktur, Außenseite und eine Anzahl von ungesteuerten Gasaus- und -einlaßöffnungen (11) an der gegenüberliegenden, bezogen auf die Baugruppe, Innenseite aufweist und das an beiden Enden verschlossen ist.

5. Baugruppe nach Anspruch 1, **dadurch gekennzeichnet**, daß zwei Materialbahnen aus gummiertem Gewebe durch Abstandsfäden, die mit den Geweben der Materialbahnen verbunden sind, in einem durch die Länge der Abstandsfäden bestimmten maximalen Abstand parallel zueinander gehalten sind, daß die Materialbahnen in Verbindung mit umlaufenden Randprofilen eine gasdichte Kammer umgrenzen, deren Gasfüllung mittels eines zum Fördern einsetzbaren Druckgebläses veränderbar ist, daß die mit dem Fördern des Gebläses einhergehende zunehmende Gasfüllung, die die beiden Randprofile entlang den Längskanten der Baugruppe zunehmend voneinander entfernt entgegen der Kraft von Druckfedern (8) innerhalb der Kammer (15) zwischen diesen Randprofilen erfolgt, wobei bei nichttätigem Druckgebläse die gasdichte Kammer durch gesteuerte Öffnungen mit der Umgebung der Baugruppe verbunden wird, so daß die sich entspannenden Druckfedern die Baugruppe in ihre Ausgangsbreite zurückbringen (Fig. 5,6).

6. Baugruppe nach Anspruch 5, **dadurch gekennzeichnet**, daß die Druckfedern gewickelte Druckfedern sind, deren eines Ende am Randprofil der einen Längskante der Baugruppe, deren anderes Ende am Randprofil der anderen Längskante der Baugruppe befestigt sind.

7. Baugruppe nach Anspruch 5 oder 6, **dadurch gekennzeichnet,** daß bei ständig geschlossener Kammer das Gebläse zwischen Druck- und Saugbetrieb umstellbar ist.

8. Baugruppe nach einem der Ansprüche 5 bis 7, **dadurch gekennzeichnet**, daß sie zwischen Seitenwände (16,17) einbringbar ist, die an einer Wand einer Verladetorumgrenzung zu befestigen ist.

9. Verwendung einer Baugruppe nach einem der Ansprüche 2 bis 4 zur Abdichtung des Spaltes zwischen der Umgrenzung einer Gebäudeöffnung und der Umgrenzung einer gegenüber dieser Gebäudeöffnung zu rangierenden Fahrzeuges ("Torabdichtung").

10. Torabdichtung unter Verwendung einer bahnförmigen Baugruppe nach einem der Ansprüche 2 bis 4 in der Verwendung gemäß Anspruch 9, **dadurch gekennzeichnet**, daß den beiden Seitenwänden und der Oberseite der Gebäudeöffnung je eine solche bahnförmige Baugruppe zugeordnet ist.

11. Torabdichtung nach Anspruch 10, **dadurch gekennzeichnet**, daß die zu befestigende Kante der Baugruppe derart der Umgrenzung der Gebäudeöffnung zugeordnet ist, daß die Baugruppe in der Öffnungsebene zu verstellen ist.

12. Torabdichtung nach Anspruch 10, **dadurch gekennzeichnet**, daß die zu befestigende Kante der Baugruppe derart der Umgrenzung der Gebäudeöffnung zugeordnet ist, daß die Baugruppe senkrecht zur Öffnungsebene zu verstellen ist.

13. Baugruppe nach einem der Ansprüche 5 bis 8, **dadurch gekennzeichnet**, daß das einer Wand der Verladetorumgrenzung zuzuordnende Randprofil (11) ein starres Profil mit Luftein- und -austrittsöffnungen (12) ist.

14. Baugruppe nach einem der Ansprüche 5 bis 8 und 13, **dadurch gekennzeichnet**, daß das Randprofil an der dem Fahrzeugaufbau zuzuordnenden Baugruppenlängskante und das Profil an beiden schmalen Baugruppenkanten Streifenabschnitte (9a) aus dem Material der beiden Materialbahnen (5,6) ist.

15. Baugruppe nach Anspruch 14, **dadurch gekennzeichnet**, daß die Streifenabschnitte die Abschnitte eines vom einen zum anderen Ende des Randprofiles, das einer Wand der Verladetorumgrenzung zuzuordnen ist, umlaufenden Streifens sind, mit seinen Rändern auf den Rändern der beiden Materialbahnen (5,6) aufliegt und mit diesen verklebt oder verschweißt ist.

16. Baugruppe nach einem der Ansprüche 1 bis 8 und 13 bis 15, **gekennzeichnet** durch Druckfedern (8) in Verbindung mit einem vom Druckbetrieb auf Saugbetrieb umstellbaren Gebläse (13).

## Claims

1. A variable-contour, strip-like sub-assembly for bounding the gap between two surfaces movable relative to one another, more particularly a stationary surface to which the sub-assembly can be secured along one of its edges, and a surface mechanically adjustable relative to the stationary surface and against which the opposite edge of the sub-assembly is brought to abut, the sub-assembly comprising two substantially parallel webs of material between which means are disposed so as to determine the maximum spacing between them, the webs being parts of the envelope round a variable volume of gas, a gas supply being adapted to increase the volume of gas and correspondingly lengthen the sub-assembly in one direction and tighten springs, and in the event of the volume of gas decreasing, a controlled connection is made between the gas volume and the space surrounding the sub-assembly so as to loosen the springs and partly or completely counteract the lengthening of the sub-assembly, characterised in that each web of material is a fabric which in its initial state is smooth and has a gas-tight coating and the spacing means comprise a number of tension-resistant but compressible and flexible threads disposed between the smooth webs of fabric with their gas-tight coating.

2. A sub-assembly according to claim 1, characterised in that the sub-assembly between the coated webs of fabric is closed all round in gas-tight manner, the sub-assembly has control means for controlled supply and discharge of a gas into or out of the thus-formed cavity in the sub-assembly and at least one strip-like flat spiral spring (18) is secured to the outside of at least one of the webs at points which are at least approximately distributed along the flat spiral spring, and in a direction which extends between the edge of the sub-assembly to be secured and the opposite edge of the sub-assembly and in which the sub-assembly can bend (Figs. 1 to 4).

3. A sub-assembly according to claim 2, characterised in that at least one pocket (17) is formed on the outside of at least one of the two coated fabric webs and extends between the edge to be fastened and the edge to be brought into abutment and receives the one or more strip-like flat spiral springs (18).

4. A sub-assembly according to claim 2 or 3, characterised in that the gas-tight connection between the two webs of material along an edge of the sub-assembly is made by means of a rod-like hollow section member (10) which is connected to the two webs in gas-tight manner, has the same length as the aforementioned edge of the sub-assembly and has at least one controllable gas inlet and discharge device (13, 15) on the outside relative to the structure and a number of non-controlled gas discharge and inlet openings (11) on the opposite inner side relative to the sub-assembly and is closed at both ends.

5. A sub-assembly according to claim 1, characterised in that two webs of material made of rubber-coated fabric are held parallel to one another at a spacing determined by the length of spacing threads connected to the fabric forming the webs of material, and the webs co-operate with peripheral edge section members to form a gas-tight chamber, filled with an amount of gas which can be altered by a pressure blower which can be used for delivery, and the amount of gas, which increases in dependence on the delivery by the blower, and occurs .... the two edge section members along the longitudinal edges of the sub-assembly at an increasing distance from one another against the force of pressure springs (8) inside the chamber (15) between the edge section members, and when the pressure blower is not in operation the gas-tight chamber is connected to the space surrounding the sub-assembly through controlled openings, so that the pressure springs are loosened and bring the sub-assembly back to its starting width (Figs. 5 and 6).

6. A sub-assembly according to claim 5, characterised in that the pressure springs are coiled, one end of the springs being connected to the edge section member along one longitudinal edge of the sub-assembly, whereas the other end is connected to the edge section member along the other longitudinal edge of the sub-assembly.

7. A sub-assembly according to claim 5 or 6, characterised in that when the chamber is constantly closed, the blower can be changed over between pressure and suction operation.

8. A sub-assembly according to any of claim 5 to 7, characterised in that it can be disposed between side walls (16, 17) for fastening to a wall of a loading-gate contour.

9. Use of a sub-assembly according to any of claims 2 to 4 for sealing the gap between the contour of an opening in a building and the contour of a vehicle for manoeuvring relative to the opening ("gate seal").

10. A gate seal using a web-like sub-assembly according to any of claims 2 to 4 in the use according to claim 9, characterised in that an aforementioned web-like sub-assembly is associated with the two side walls and the top of the opening.

11. A gate seal according to claim 10, characterised in that the edge of the sub-assembly for securing is associated with the contour of the opening so that the sub-assembly is adjustable in the plane of the opening.

12. A gate seal according to claim 10, characterised in that the edge of the sub-assembly for securing is associated with the contour of the opening in the building so that the sub-assembly can be adjusted at right angles to the plane of the opening.

13. A sub-assembly according to any of claims 5 to 8, characterised in that the edge section member (11) for associating with one wall of the loading gate contour is a rigid section member having air inlet and outlet openings (12).

14. A sub-assembly according to any of claims 5 to 8 and 13, characterised in that the edge section member along the longitudinal edge of the sub-assembly for associating with the vehicle body and the edge member at the two narrow edges of the sub-assembly are strip portions (9a) of the material forming the two webs (5, 6).

15. A sub-assembly according to claim 14, characterised in that the strip portions are portions of a strip extending round from one to the other end of the edge section member for associating with a wall of the loading gate contour, and the edges of the strip rest on the edges of the two webs (5, 6) and are stuck or welded thereto.

16. A sub-assembly according to any of claims 1 to 8 and 13 to 15, characterised by pressure springs (8) in conjunction with a blower (13) which can be changed over from pressure operation to suction operation.

## Revendications

1. Ensemble en forme de lé à contour variable, destiné à calfeutrer l'interstice entre deux surfaces mobiles l'une par rapport à l'autre, en particulier entre une surface fixe, à laquelle l'ensemble doit être fixé le long d'un de ses bords, et une surface qui est déplaçable de manière forcée par rapport à la précédente et contre laquelle doit être appliqué le bord opposé de l'ensemble, l'ensemble comportant deux lés textiles qui s'étendent de manière sensiblement parallèle l'un à l'autre, entre lesquels se trouvent des moyens déterminant leur écartement maximal et qui sont des éléments d'une gaine d'un volume gazeux variable, un apport de gaz provoquant une augmentation du volume gazeux, un allongement correspondant de l'ensemble dans une direction et la mise en tension de ressorts, les ressorts se relâchant et l'allongement de l'ensemble étant, en outre, totalement ou partiellement annulé grâce à la possibilité de réduire le volume gazeux par une liaison commandée de ce dernier avec l'environnement de l'ensemble, **caractérisé en ce que** chaque lé textile est un tissu lisse à l'état initial et garni d'un revêtement étanche aux gaz, et en ce que les moyens déterminant l'écartement sont constitués d'une pluralité de fils résistants à la traction, mais souples à la pression et à la flexion, qui sont disposés entre les lés de tissu lisses garnis d'un revêtement étanche aux gaz.

2. Ensemble selon la revendication 1, **caractérisé en ce que**, sur tout son pourtour, l'ensemble est fermé de manière étanche aux gaz entre les lés de tissu revêtus, en ce que l'ensemble comporte des moyens de commande pour commander l'admission et l'évacuation d'un gaz dans ou hors de la cavité de l'ensemble ainsi formée, et en ce que, sur le côté extérieur d'au moins un des lés textiles, au moins un ressort spiral (18) en forme de bande est fixé en des points répartis sur la longueur du ressort spiral de manière au moins sensiblement régulière, dans une direction qui s'étend entre le bord à fixer de l'ensemble et le bord opposé de l'ensemble, et dans laquelle l'ensemble est flexible (figures 1 à 4).

3. Ensemble selon la revendication 2, **caractérisé en ce que**, sur le côté extérieur d'au moins un des deux lés de tissu revêtus, est formée une poche (17) qui s'étend entre le bord à fixer et le bord à appliquer, et dans laquelle est logé le ressort spiral (18) en forme de bande au nombre d'au moins un.

4. Ensemble selon la revendication 2 ou 3, **caractérisé en ce que** la liaison étanche aux gaz des deux lés textiles le long d'un des bords de l'ensemble est réalisée au moyen d'un profilé creux (10) en forme de barre, qui est relié aux deux lés textiles de manière étanche aux gaz, qui possède la longueur de ce bord de l'ensemble, qui comporte, sur le côté se trouvant à l'extérieur par rapport à la structure, au moins un dispositif manoeuvrable d'admission et d'évacuation de gaz (13, 15) et, sur le côté opposé se trouvant à l'intérieur par rapport à l'ensemble, une pluralité d'ouvertures non manoeuvrables d'évacuation et d'admission de gaz (11), et qui est fermé à ses deux extrémités.

5. Ensemble selon la revendication 1, **caractérisé en ce que** deux lés textiles en tissu caoutchouté sont maintenus parallèles l'un à l'autre, par l'intermédiaire de fils d'écartement qui sont reliés au tissu des lés textiles, avec un écartement maximal défini par la longueur des fils d'écartement, en ce que les lés textiles délimitent, en liaison avec des profilés de bord périphériques, une chambre étanche aux gaz dont le remplissage de gaz peut être modifié au moyen d'une soufflante sous pression pouvant être utilisée en mode de refoulement, en ce que l'augmentation du remplissage de gaz, qui accompagne le refoulement de la soufflante et éloigne de plus en plus les deux profilés de bord l'un de l'autre le long des bords longitudinaux de l'ensemble, s'effectue à l'encontre de 'la force de ressorts de pression (8) disposés à l'intérieur de la chambre (15) entre ces profilés de bord, la chambre étanche aux gaz étant reliée à l'environnement de l'ensemble par des ouvertures manoeuvrables lorsque la soufflante sous pression ne fonctionne pas, de façon que le relâchement des ressorts de pression ramène l'ensemble à sa largeur initiale (figures 5, 6).

6. Ensemble selon la revendication 5, **caractérisé en ce que** les ressorts de pression sont des ressorts de pression spiraux dont l'une des extrémités est fixée au profilé de bord de l'un des bords longitudinaux de l'ensemble et dont l'autre extrémité est fixée au profilé de bord de l'autre bord longitudinal de l'ensemble.

7. Ensemble selon la revendication 5 ou 6, **caractérisé en ce que**, lorsque la chambre est constamment fermée, la soufflante peut être commutée entre le mode refoulement et le mode aspiration.

8. Ensemble selon l'une des revendications 5 à 7, **caractérisé en ce qu'**il peut être logé entre des parois latérales (16, 17) qui doivent être fixées à une paroi d'un encadrement de porte de chargement.

9. Emploi d'un ensemble selon l'une des revendications 2 à 4 pour calfeutrer l'interstice entre l'encadrement d'une ouverture de bâtiment et l'encadrement d'un véhicule devant se garer en face de cette ouverture de bâtiment (« calfeutrage de porte »).

10. Calfeutrage de porte mettant en oeuvre un ensemble en forme de lé selon l'une des revendications 2 à 4 dans l'emploi conforme à la revendication 9, **caractérisé en ce qu'**un tel ensemble en forme de lé est associé à chacune des deux parois latérales et à la partie supérieure de l'ouverture du bâtiment.

11. Calfeutrage de porte selon la revendication 10, **caractérisé en ce que** le bord à fixer de l'ensemble est associé à l'encadrement de l'ouverture du bâtiment de façon que l'ensemble puisse être déplacé dans le plan de l'ouverture.

12. Calfeutrage de porte selon la revendication 10, **caractérisé en ce que** le bord à fixer de l'ensemble est associé à l'encadrement de l'ouverture du bâtiment de façon que l'ensemble puisse être déplacé perpendiculairement au plan de l'ouverture.

13. Ensemble selon l'une des revendications 5 à 8, **caractérisé en ce que** le profilé de bord (11) associé à l'une des parois de l'encadrement de la porte de chargement est un profilé rigide pourvu d'ouvertures admission et d'évacuation d'air (12).

14. Ensemble selon l'une des revendications 5 à 8 et 13, **caractérisé en ce que** le profilé de bord disposé contre le bord longitudinal de l'ensemble associé à la carrosserie du véhicule et le profilé disposé contre les deux bords étroits de l'ensemble sont constitués de portions de bande (9a) réalisées dans le matériau des deux lés textiles (5, 6).

15. Ensemble selon la revendication 14, **caractérisé en ce que** les portions de bande sont les portions d'une bande périphérique s'étendant d'un côté à l'autre du profilé de bord associé à l'une des parois de l'encadrement de la porte de chargement, ladite bande périphérique étant appliquée, par ses bords, contre les bords des deux lés textiles (5, 6) et étant collée ou soudée avec ces derniers.

16. Ensemble selon l'une des revendications 1 à 8 et 13 à 15, **caractérisé** par des ressorts de pression (8) associés à une soufflante (13) qui peut être commutée du mode refoulement au mode aspiration.
